# DEMANDE DE BREVET EUROPEEN

(11) **EP 2 369 486 A1**
(43) Date de publication de la demande: **28.09.2011**
(21) Numéro de dépôt: 11157038.8
(22) Date de dépôt: 04.03.2011
(51) Int. Cl.: G06F 11/263

(54) **Système de test d'une architecture de calcul multitâches à partir de données de communication entre processeurs et procédé de test correspondant**

(30) Priorité: 11.03.2010 FR 1051762
(71) Demandeur: STMicroelectronics (Grenoble 2) SAS, 38000 Grenoble (FR)
(72) Inventeur: De Poy Alonso, Iker, 38400, SAINT MARTIN D'HERES (FR)
(74) Mandataire: Delprat, Olivier

(57) **Abrégé**

Système d'une architecture de calcul multitâches, comprenant un ensemble de processeurs reliés par des canaux de communication de données, comprenant un étage (B) de génération de séquences d'instruction de test à partir de caractéristiques desdits processeurs comprenant des règles de programmation des processeurs de calcul, caractérisé en ce qu'il comporte un étage de contrôle (A) de l'étage de génération de séquences à partir des données représentatives des canaux de communication des données.

## Description

L'invention concerne, de manière générale, les architectures de calcul multitâches, et se rapporte particulièrement à un dispositif et à un procédé de tests d'une telle architecture.

Par architecture de calcul multitâches, on entend, dans le cadre de la présente description, des architectures capables de réaliser alternativement plusieurs instructions. Ainsi, l'invention s'applique en particulier, mais de manière non limitative, à tout type d'architecture multitâches, telles que les architectures utilisant la technologie VLIW (« Very Long Instruction Word », en anglais), selon lesquelles chaque mot est susceptible de contenir plusieurs instructions, les architectures multi-files, généralement connues sous la dénomination anglaise « Multithreading », selon lesquelles un calculateur est capable de traiter alternativement plusieurs files d'instructions, les architectures SIMD (« Single Instruction On Multiple Data », en langue anglaise) selon lesquelles un calculateur comporte plusieurs unités de calcul fonctionnant en parallèle, les architectures en virgule flottante...

Pour procéder au test de telles architectures de calcul multitâches, il est généralement souhaitable d'effectuer plusieurs instructions de test en utilisant des techniques de simulation.

Tout d'abord, des tests doivent être exécutés sur le simulateur de jeux d'instructions (« Instruction Set Simulator » ou ISS, en langue anglaise), puis au niveau des transferts de registre puis, enfin, sur la version finale synthétisée du processeur tel que mis en oeuvre sur circuit logique programmable.

De tels tests sont destinés à identifier différents niveaux de défaillance qui sont susceptibles d'apparaître au sein de l'architecture. Ils sont également destinés à identifier des défaillances au sein du compilateur, en particulier en ce qui concerne les instructions, leur syntaxe, leur sémantique, ...

Ils doivent par ailleurs être susceptibles de couvrir un maximum, voire l'ensemble des scénarios multitâches susceptibles d'être mis en oeuvre au sein de l'architecture.

Il existe déjà, dans l'état de la technique, des dispositifs de test d'architectures de calcul. La société OBSIDIAN propose, à cet égard, un outil de test commercialisé sous la dénomination Raven^{®}. Cet outil est capable de prendre en compte le caractère multitâches d'une architecture à tester. Mais il est tout à fait inadapté pour tenir compte de l'environnement de communication dans un système multiprocesseurs.

On pourra également se référer à l'outil de test dénommé Genesys^{®}, commercialisé par la société IBM, qui offre un outil de génération de test dynamique et configurable.

De manière générale, il a été constaté que les outils de test actuellement disponibles ne peuvent être utilisés que par des spécialistes des architectures de traitement multitâches, et sont longs et fastidieux à utiliser. Ils sont enfin relativement couteux.

Il est donc proposé, selon la présente description, un dispositif et un procédé de test d'une architecture de calcul multitâches qui soit moins complexe à utiliser et qui, en outre, soit capable de tenir compte de l'environnement dans lequel les processeurs de l'architecture sont disposés.

Il est donc proposé, selon un premier aspect, un système de test d'une architecture de calcul multitâches comprenant un ensemble de processeurs reliés par des canaux de communication de données, comprenant un étage de génération de séquences d'instructions de test à partir de caractéristiques desdits processeurs comprenant des règles de programmation des processeurs de calcul.

Dans un mode de réalisation, ce système comporte un étage de contrôle de l'étage de génération des séquences à partir des données représentatives des canaux de communication de données.

Selon une autre caractéristique, l'étage de contrôle est programmé pour être sollicitée une fois pour chaque test d'une architecture et pour solliciter l'étage de génération de séquences d'instructions pour chaque test d'un processeur.

Ce système de test peut également comporter un générateur de données dans les canaux de communication.

Il peut en outre comporter une mémoire pour le stockage d'une description des instructions de programmation de l'architecture de calcul.

Selon encore une autre caractéristique, il peut comporter une mémoire pour le stockage d'une description de l'architecture à tester.

Il est également proposé, selon un deuxième aspect, un procédé de test d'une architecture de calcul multitâches comprenant un ensemble de processeurs reliés par des canaux de communication de données, comprenant la génération de séquences d'instructions de test à partir de caractéristiques desdits processeurs comprenant des règles de programmation des processeurs de calcul.

Dans un mode de mise en oeuvre, selon ce procédé, on génère les séquences d'instructions de test à partir de données représentatives des canaux de communication.

Selon un autre mode de mise en oeuvre, on collecte les données représentatives des canaux de communication à partir des données circulant entre les processeurs.

Pour le test d'un premier processeur récepteur, on génère aléatoirement les données circulant vers ledit processeur.

On peut également affecter un identifiant à chaque processeur. On teste alors les processeurs séquentiellement à partir des identifiants affectés aux processeurs.

Avantageusement, les séquences d'instructions de test sont générées aléatoirement à partir d'opérations et d'opérandes sélectionnées à partir de contraintes de test élaborées aléatoirement ou spécifiées par un utilisateur.

Il est enfin proposé, selon un troisième aspect, une architecture de calcul multitâches comportant un système de test tel que défini ci-dessus.

D'autres buts, caractéristiques et avantages de l'invention apparaîtront à la lecture de la description suivante, donnée uniquement à titre d'exemple non limitatif, et faite en référence aux dessins annexés, sur lesquels :
- la figure 1 illustre l'architecture générale d'un système de test d'une architecture de calcul multitâches selon le premier aspect mentionné ci-dessus ;
- la figure 2 est un organigramme illustrant les principales phases de l'algorithme mis en oeuvre au sein de l'étage de contrôle ;
- les figures 3, 4 et 5 illustrent la prise en compte de l'architecture des canaux de communication reliant les processeurs de traitement.

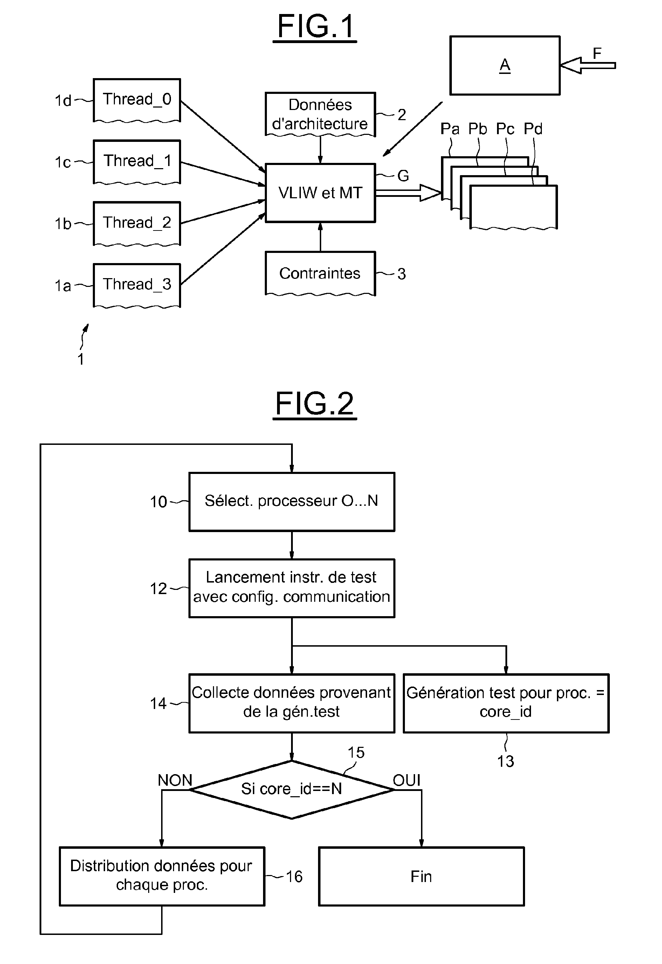

On va tout d'abord décrire, en référence à la figure 1, l'architecture générale d'un dispositif de test d'une architecture de calcul multitâches. Une telle architecture est également connue sous le terme d'architecture multi-files ou de « multi-thread », en anglais.

Ce dispositif est destiné à élaborer, de manière aléatoire, un nombre indéterminé de séquences de test Pa, Pb, Pc, Pd modulo n, n étant le nombre de files de calcul d'une architecture multi-files. L'objectif est ici de générer une séquence d'instructions de test par file de l'architecture multi-files, l'ensemble de ces n séquences constituant un test multi-files. Il s'agit donc en d'autres termes de créer un ensemble de séquences de test assurant le test de l'ensemble des tâches exécutées par une architecture multitâches.

Le système de test visible sur la figure 1 est également destiné à contrôler la procédure de génération des séquences de test en tenant compte de l'architecture de communication entre les processeurs en mettant en oeuvre une communication entre les processeurs de manière à envoyer et collecter des données lors de la génération des tests pour les différents processeurs.

Comme on le voit, le système comporte ainsi essentiellement deux parties, à savoir un premier étage A de contrôle et un deuxième étage B de génération d'instructions de test contrôlé par le premier étage A de contrôle.

Pour chaque test d'une architecture de calcul multitâches, le premier étage A est sollicité une seule fois, tandis que le deuxième étage B, assurant l'élaboration des séquences de test est sollicité pour chaque processeur et donc un nombre de fois égal au nombre de processeurs de l'architecture de calcul.

On notera que le système illustré à la figure 1 permet à un utilisateur, par exemple à un concepteur de circuit, un contrôleur de qualité, ... de procéder à des tests directement sélectionnés ou, au contraire, aléatoirement. Toutefois, les tests mis en oeuvre sont fondés sur l'exécution de programmes de test élaborés selon les règles de programmation de l'architecture de calcul, en fonction de l'architecture du calculateur ou processeur à contrôler, et en fonction des caractéristiques des canaux de communication entre les processeurs.

Lorsque l'utilisateur procède à un test non aléatoire, il sélectionne le type et le format des instructions et les opérandes des séquences de test. Au contraire, lorsque les tests sont réalisés de façon aléatoire, ces valeurs sont choisies aléatoirement par le système de test.

Comme le montre la figure 1, le deuxième étage B de génération d'instruction comporte essentiellement des moyens 1 de génération de séquences d'instructions de test.

Ces moyens 1 sont essentiellement constitués par des moyens de stockage 1a, 1b, 1c et 1d de séquences de test *Thread_0, ..., Thread_3* correspondant chacune à un scénario de test, et constituée chacune par des fichiers textes relativement simples utilisant des macroprogrammes paramétrables. Ces fichiers sont stockés dans une mémoire du système de test. Chaque scénario permet de fournir un grand nombre de tests générés aléatoirement par rapport à des contraintes de scénario.

Cette étage B comporte encore une mémoire 2 pour le stockage d'une représentation de l'architecture de calcul à tester, et pour la mémorisation de paramètres descriptifs des instructions de programmation de l'architecture de calcul à tester, et un générateur de programmes de test G servant à l'élaboration des programmes de test en fonction des règles de programmation de l'architecture à contrôler.

Une troisième mémoire 3 est utilisée pour mémoriser des contraintes portant sur l'élaboration des séquences de test, ces contraintes étant des directives susceptibles d'influencer les valeurs des codes d'opération et les opérandes. Plus ces contraintes sont élevées, plus les tests sont sélectifs.

En ce qui concerne le premier étage 1 de contrôle, celui-ci reçoit, en entrée, un fichier de configuration F introduit directement par l'utilisateur dans un fichier de configuration, ce fichier étant utilisé pour caractériser l'infrastructure de communication et les processeurs de l'architecture. Cet étage de contrôle est en charge de la validation des caractéristiques fonctionnelles de chaque instance du deuxième étage de génération d'instruction, c'est-à-dire de chaque phase d'élaboration d'une séquence de test pour un processeur. En d'autres termes, il autorise l'activation d'une caractéristique fonctionnelle portant notamment sur le type de processeur (VLIW, SIMD, « Multi-thread », ...) ou toute combinaison de ces caractéristiques.

Ce premier étage est également en charge de la configuration de l'architecture de communication entre les processeurs en affectant, à chaque processeur, un identifiant de processeur et en déterminant le nombre de canaux de communication entre les processeurs.

Ainsi, en se référant à la figure 2, au cours d'une première étape 10, l'étage de contrôle procède à une sélection d'un processeur. Lors de l'étape 12 suivante, il provoque l'élaboration d'une séquence de test à partir des fichiers 1a, ... 1d stockés en mémoire, à partir de contraintes stockés dans la mémoire 3 et de l'architecture de communication.

On notera que chaque processeur peut être soit un récepteur soit un émetteur. Ainsi, outre les paramètres de configuration, les données provenant des canaux de communication sont également collectées. Cette étape de génération de séquence d'instruction est lancée lorsque toutes les données relatives à l'infrastructure de communication, y compris les données provenant des divers processeurs ont été collectées et transmises au deuxième étage B en vue de l'élaboration des séquences de test pour le processeur sélectionné (étape 13).

On notera que dans le cas où le premier processeur sélectionné est un récepteur, dans la mesure où les processeurs sont sélectionnés séquentiellement, le premier étage A ne dispose d'aucune information concernant les données qui doivent être transmises vers ce premier processeur. Par conséquent, dans la mesure où le processeur devant émettre des données en direction de ce premier processeur récepteur n'a pas encore émis ses données, ces données sont simulées en étant élaborées aléatoirement par un générateur de données intégré au premier étage de contrôle A et transmises au deuxième étage de génération de séquences d'instructions. En outre, au cours de cette phase de simulation, des données additionnelles peuvent être générées et transmises vers d'autres processeurs.

Par exemple, dans le cas où un premier processeur et un deuxième processeur sont raccordés par un canal de communication et sont tous deux émetteurs ou récepteurs, en considérant le cas où le premier processeur reçoit des données du deuxième processeur, lequel n'a pas encore généré les données destinées à être transmises au premier processeur, le premier étage de contrôle de l'architecture de test génère aléatoirement ces données afin de simuler la communication entre les deux processeurs. Ces premières données dont consommées lors de la procédure de génération de séquences de test par le deuxième étage B.

De nouvelles données de communication qui doivent être envoyées au deuxième processeur peuvent également être élaborées de la même façon.

Ainsi, le premier étage de contrôle dispose, d'une part, des données que le deuxième processeur doit créer et, d'autre part, des données que le premier processeur doit consommer de sorte que les séquences de test élaborées par le deuxième étage pour chacun des processeurs sont élaborées en tenant compte de ces données.

Toutes ces données générées sont collectées (étape 14) pour être transférées vers les autres processeurs.

On notera que les étapes 10, 12, 13 et 14 mentionnées précédemment sont réalisées pour chacun des processeurs de sorte que, lors de l'étape 15 suivante, si le processeur sélectionné n'est pas le dernier, lors de l'étape 16 suivante, les données générées aléatoirement sont collectées et utilisées par le premier étage de contrôle pour être envoyées vers d'autres processeurs.

On notera que lors de la procédure de test d'une architecture de calcul multitâches utilisant le système qui vient d'être décrit, des informations de configuration de l'architecture de calcul multitâches et des données provenant d'autres processeurs sont collectées ou, le cas échéant, élaborées aléatoirement puis sont envoyées vers le deuxième étage B de génération d'instructions afin de lancer l'élaboration des séquences de test. Cet outil est ainsi capable de consommer des données provenant d'autres processeurs ou générées aléatoirement en tenant compte de la configuration de l'architecture de communication.

Lorsque l'élaboration des séquences de test est achevée, des séquences de test sont disponibles pour être lancées au sein d'un processeur correspondant à l'identifiant associé à la séquence de test et au processeur. Les données générées aléatoirement qui concernent l'architecture de communication sont collectées et transmises au premier étage pour être envoyées vers d'autres processeurs.

On notera qu'un nombre illimité de canaux de communication peut être configuré afin de pouvoir s'adapter à tout type d'architecture de communication. De même, le nombre de processeurs est quelconque de sorte que le procédé et le système qui viennent d'être décrits peuvent s'adapter à tout type d'architecture de calcul multitâches.

On notera par ailleurs que les données provenant des canaux de communication possèdent un niveau de priorité élevé. Elles sont consommées prioritairement au cours de la génération des tests.

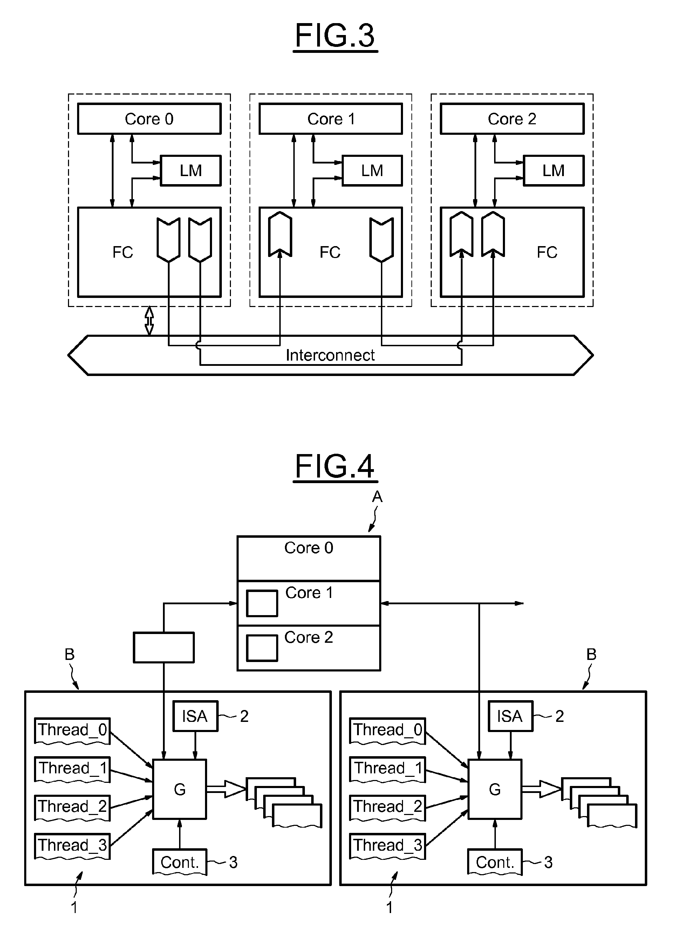

On va maintenant décrire en référence aux figures 3, 4 et 5 un exemple de mise en oeuvre d'une procédure de test élaboré comme décrit précédemment.

Dans l'exemple illustré à la figure 3, l'architecture considérée est composée de trois processeurs désignés par les références « CORE 0 », « CORE 1 » et « CORE 2 ». Chaque processeur est associé à une mémoire locale LM et à un contrôleur de flux FC. Un réseau d'interconnexion « Interconnect » assure la communication des données entre les processeurs.

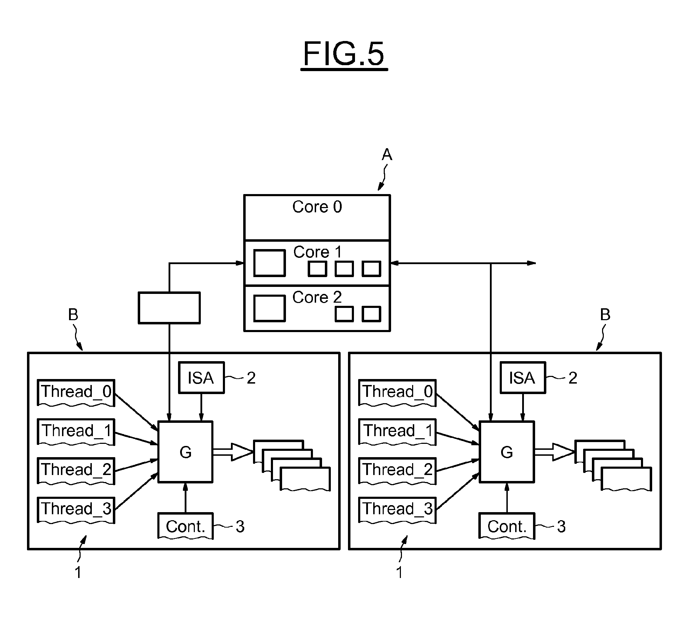

Au cours d'une première phase, le premier processeur « CORE 0 » est sélectionné. Par exemple, ce premier processeur est un récepteur de sorte que seules des informations de configuration sont transmises, à savoir des caractéristiques portant sur les processeurs et des données de configuration de communication élaborées aléatoirement. Ces données sont transmises au deuxième étage B pour être consommées et pour l'élaboration d'une séquence de test pour le premier processeur (figure 4). Lorsque la séquence de test est achevée, toutes les données générées sont transférées vers les autres processeurs et, également collectées par le premier étage de contrôle (figure 5).

Dans l'exemple de mise en oeuvre illustré, le test mis en oeuvre au sein du premier processeur a généré trois données destinées au premier processeur et deux données destinées au deuxième processeur. Ces données, qui sont stockées au sein du premier étage A, sont utilisées pour mettre en oeuvre la deuxième phase du deuxième étage destinée à l'élaboration des séquences de test pour le deuxième processeur. La procédure se poursuit alors pour l'élaboration des séquences de test pour les autres processeurs.

## Revendications

1. Système d'une architecture de calcul multitâches, comprenant un ensemble de processeurs reliés par des canaux de communication de données, comprenant un étage (B) de génération de séquences d'instruction de test à partir de caractéristiques desdits processeurs comprenant des règles de programmation des processeurs de calcul, **caractérisé en ce qu'**il comporte un étage de contrôle (A) de l'étage de génération de séquences à partir des données représentatives des canaux de communication des données.

2. Système selon la revendication 1, **caractérisé en ce que** l'étage de contrôle est programmé pour être sollicité une fois pour chaque test d'une architecture et pour solliciter le deuxième étage (B) pour chaque test d'un processeur.

3. Système selon l'une des revendications 1 et 2, **caractérisé en ce qu'**il comporte un générateur de données dans les canaux de communication.

4. Système selon l'une quelconque des revendications 1 à 3, **caractérisé en ce qu'**il comporte une mémoire (2) pour le stockage d'une description ou des instructions de programmation de l'architecture de calcul.

5. Système selon l'une quelconque des revendications 1 à 4, **caractérisé en ce qu'**il comporte une mémoire (2) pour le stockage d'une description de l'architecture à tester.

6. Procédé de test d'une architecture de calcul multitâches comprenant un ensemble de processeurs reliés par des canaux de communication de données, comprenant la génération de séquences d'instruction de test à partir de caractéristiques desdits processeurs comprenant des règles de programmation des processeurs de calcul, caractérisé en que l'on génère des séquences d'instruction de test à partir de données représentatives de canaux de communication.

7. Procédé selon la revendication 6, **caractérisé en ce que** l'on collecte les données représentatives des canaux de communication à partir des données circulant entre les processeurs.

8. Procédé selon l'une des revendications 6 et 7, dans lequel, pour le test d'un premier processeur récepteur, on génère aléatoirement les données circulant vers ledit processeur.

9. Procédé selon l'une quelconque des revendications 6 à 8, **caractérisé en ce que** l'on affecte un identifiant à chaque processeur et **en ce que** l'on teste les processeurs séquentiellement à partir des identifiants affectés aux processeurs.

10. Procédé selon l'une quelconque des revendications 6 à 9, **caractérisé en ce que** les séquences d'instruction de test sont générées automatiquement à partir de codes d'opération et d'opérandes sélectionnés à partir de contraintes de test élaborés aléatoirement ou spécifiés par l'utilisateur.

11. Architecture de calcul multitâches, **caractérisée en ce qu'**elle comporte un système de test selon l'une quelconque des revendications 1 à 5.
